# DEMANDE DE BREVET EUROPEEN

(11) **EP 0 708 560 A1**
(43) Date de publication de la demande: **24.04.1996**
(21) Numéro de dépôt: 95402292.7
(22) Date de dépôt: 13.10.1995
(51) Int. Cl.: H04N 7/14

(54) **Appareil à écran et caméra, doté d'un mécanisme d'orientation d'objectif**

(30) Priorité: 18.10.1994 FR 9412422
(71) Demandeur: ALCATEL BUSINESS SYSTEMS, F-75008 Paris (FR)
(72) Inventeur: Chretien, Jean, F-67000 Strasbourg (FR)
(74) Mandataire: Schaub, Bernard

(57) **Abrégé**

Appareil, à fonction visiophonique, comportant un écran logé dans un boîtier (3), une caméra et un mécanisme permettant d'orienter l'objectif (2) de la caméra.

Le mécanisme comporte un agencement qui incorpore un élément de positionnement d'objectif (4A) venant se loger dans un logement autocentreur, au-dessus de l'écran, lors des prises de vue à axe de visée (V) horizontal. Un élément articulé en deux parties (4B, 4C) forme un coulisseau mobile dans une glissière (10) derrière l'écran. Dans une première position, l'élément de positionnement, assujetti à une première des deux parties, est en place dans le logement autocentreur. Dans une seconde position l'élément de positionnement est hors de son logement et seule la seconde partie subsiste dans la glissière. Une articulation (4D) permet un basculement de la première partie dans une position pour laquelle l'axe de visée de l'objectif est verticalement dirigé vers le bas.

## Description

L'invention concerne un appareil, usuellement de table, à écran et caméra qui est plus particulièrement prévu pour permettre des prises de vue de type visiophonique et qui est doté d'un mécanisme d'orientation d'objectif, pour aussi permettre la réalisation de prises de vue sur table et en conséquence verticalement et vers le bas.

De tels appareils de type visiophone ou terminal informatique, couramment dit multimédia, à capacités visiophoniques ont été initialement étudiés pour permettre de réaliser des prises de vue pour lesquelles les axes de visée des objectifs de leurs caméras sont plus ou moins horizontaux, bien qu'il soit souvent possible de modifier l'angle de l'axe de visée d'un objectif par une simple modification de l'orientation de tout ou partie de la caméra qui le comporte. Par contre, il n'est pas toujours facile de réaliser des prises de vue à la verticale, si l'appareil est destiné à fonctionner sur une table de support et s'il n'existe pas de moyen permettant de dégager la caméra hors de l'appareil où elle est montée. Or l'orientation de l'objectif d'une caméra verticalement vers le bas est demandée par les utilisateurs d'appareils de table ayant des capacités visiophoniques, car il est intéressant de pouvoir obtenir des images non déformées de documents ou de petits objets simplement posés sur la table où est placé un appareil.

L'invention concerne donc un appareil doté d'un mécanisme prévu pour permettre de manière simple l'orientation de l'objectif de la caméra qu'il comporte, notamment dans le cas où cet appareil est de type visiophone ou terminal informatique ayant des capacités visiophoniques, afin de permettre des prises de vue à la verticale vers le bas, lorsque l'appareil est normalement posé avec son écran vertical ou quasi-vertical, en plus des prises de vue à l'horizontale classiquement obtenues.

L'appareil comporte un écran afficheur d'images, logé dans un boîtier, une caméra électronique assujettie au boîtier à proximité de l'écran pour permettre des prises de vue de type visiophonique, et un mécanisme permettant d'orienter au moins l'objectif de la caméra.

Selon une première caractéristique de l'invention, le mécanisme comporte un agencement, mobile par rapport au boîtier, incorporant un élément de positionnement d'objectif d'où débouche cet objectif au-dessus de l'écran sur le boîtier, où vient se loger l'élément de positionnement, lors des prises de vue pour lesquelles l'axe de visée de l'objectif est au moins approximativement horizontal dans une première position, ledit agencement comportant un élément articulé , composé d'une première et d'une seconde parties qui forment un coulisseau mobile en translation dans une glissière du boîtier située en arrière de l'écran entre la première position et une seconde position pour laquelle la première partie est déplacée, hors de la glissière où seule subsiste la seconde partie, de manière à dégager l'élément de positionnement et une articulation unissant ces deux parties, hors de la glissière, cette articulation permettant un basculement de la première partie en une position pour laquelle l'axe de visée de l'objectif est dirigé vers le bas avec une orientation au moins approximativement verticale.

Selon une caractéristique de l'invention, l'élément de positionnement d'objectif coopère avec un logement autocentreur situé au-dessus de l'écran sur le boîtier et dans lequel cet élément de positionnement se positionne pour des prises de vue pour lesquelles l'axe de visée de l'objectif est au moins approximativement horizontal. Le coulisseau mobile d'élément articulé qui est composé de la première et de la seconde parties est mobile en translation dans une glissière située en arrière de l'écran entre une première position pour laquelle l'élément de positionnement assujetti à la première partie est en place dans le logement autocentreur et une seconde partie pour laquelle la première partie est déplacée hors de la glissière où seule subsiste la seconde partie, de manière à dégager l'élément de positionnement hors du logement autocentreur.

Selon une caractéristique de l'invention, l'élément de positionnement d'objectif est porté par une rallonge montée coulissante dans un logement guide situé à une extrémité de ladite première partie qui est à l'opposé de l'articulation, entre une position pour laquelle la rallonge est enfoncée dans le logement guide et permet le placement de l'élément de positionnement dans son logement autocentreur, lorsque le coulisseau est enfoncé dans la glissière, et une autre position pour laquelle l'objectif est éloigné du reste de l'appareil par la saillie de la rallonge qui éloigne l'élément de positionnement de la première partie. Selon une caractéristique de l'invention, l'appareil comporte un boîtier monté sur un socle par l'intermédiaire d'au moins un pied, éventuellement extensible, muni d'articulations de réglage de positionnement à chacune de ses deux extrémités qui permettent de déplacer l'appareil d'arrière en avant par rapport au socle de manière à notamment d'éloigner l'axe de visée de l'objectif loin du socle, en plus de la saillie de rallonge, lorsque cet axe est orienté verticalement par le positionnement de la première partie de coulisseau.

Selon une autre caractéristique de l'invention, le logement autocentreur est situé dans un bord supérieur du boîtier, au dessus du milieu de l'écran pour permettre une mise en place par gravité de l'élément de positionnement, lorsque le coulisseau s'enfonce dans la glissière.

Selon encore une autre caractéristique de l'invention, la première partie du coulisseau vient reposer sur un bord supérieur du boîtier dans la partie de ce boîtier où débouche le logement autocentreur, lorsque ladite première partie est basculée après avoir été sortie de la glissière. L'invention, ses caractéristiques et ses avantages sont précisés dans la description qui suit en liaison avec les figures évoquées ci-dessous.

La figure 1 présente une vue de face d'un appareil de type visiophonique.

Les figures 2, 3 et 4 présentent l'appareil proposé sur la figure 1 en vue de gauche pour trois positions différentes du mécanisme d'orientation d'objectif de caméra que comporte cet appareil.

Les figures 5 et 6 présentent deux vues de gauche d'un agencement du mécanisme présenté sur les figures précédentes, pour deux des positions possibles pour cet agencement.

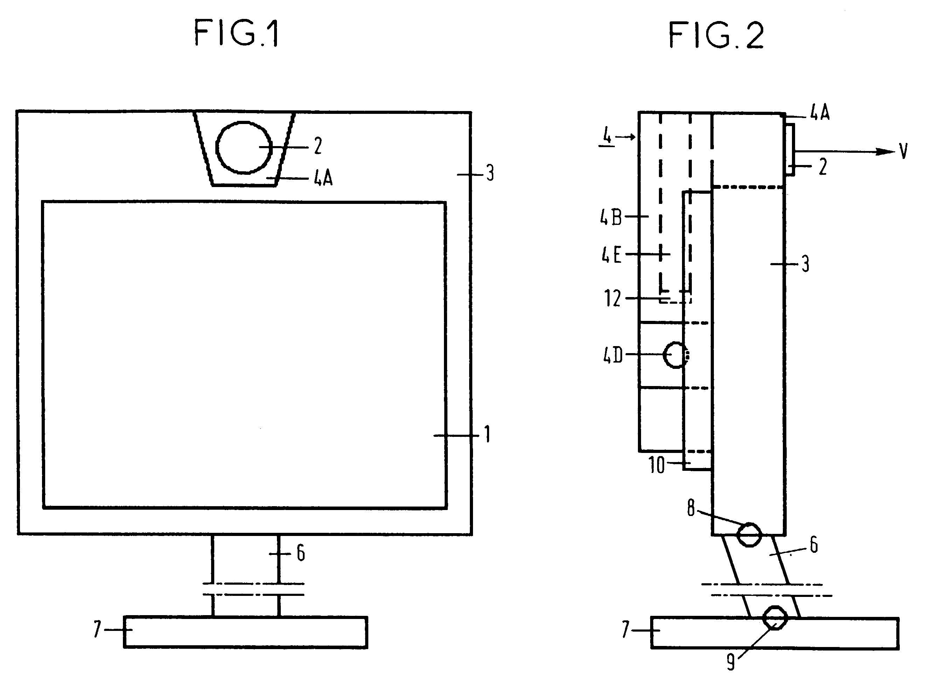

L'appareil de table présenté sur la figure 1 est supposé prévu pour être utilisé pour des communications de type visiophonique, et comporte notamment un équipement vidéo incluant un écran afficheur électro-optique 1 et une caméra électronique dont l'objectif est référencé 2, ainsi qu'un équipement audio incluant au moins un microphone et un haut-parleur cet équipement audio n'étant pas représenté ici car il est sans rapport direct avec l'objet de l'invention. Cet appareil est par exemple un visiophone proprement dit ou un moniteur d'ordinateur auquel on a associé une caméra pour permettre l'utilisation de cet ordinateur en tant que terminal visiophonique, ou encore un ordinateur regroupant en un même appareil un ou des processeurs et des périphériques incluant un écran afficheur et une caméra. Dans la réalisation envisagée, l'écran afficheur est préférablement un écran plat, par exemple du type dit à matrice active, la caméra est préférablement une caméra électronique de petite taille.

L'écran 1 et au moins une partie de l'électronique nécessaire à son fonctionnement sont logés dans un boîtier 3 qui comporte une fenêtre permettant la vision de la surface d'affichage que comporte cet écran.

La caméra ou au moins la partie de caméra qui porte l'objectif 2 peut être positionnée par l'utilisateur à un emplacement situé en bordure de la surface d'affichage de l'écran dans la zone centrale située au dessus de cet écran pour permettre des prises d'images à l'occasion desquelles l'axe de visée V de l'objectif est orienté plus ou moins parallèlement à la perpendiculaire P passant par le centre de l'écran. Ceci est notamment prévu pour permettre de réaliser des prises de vue d'un utilisateur dont le visage est pratiquement face à l'écran qu'il regarde, par exemple au cours d'une communication visiophonique où cet utilisateur veut voir et être vu.

Dans la réalisation envisagée, la caméra, ou au moins une partie de caméra comportant l'objectif 2, est portée par un agencement 4 qui permet notamment de positionner cet objectif avec précision par rapport à l'écran de manière à de qu'il soit correctement orienté pour les prises de vue, dites de type visage, au cours desquelles l'axe de visée V est orienté quasi-horizontalement comme défini ci-dessus. Cet agencement 4 comporte par exemple un élément de positionnement 4A à allure en V où débouche centralement l'objectif 2. Cet élément 4A vient se loger, ici par gravité, dans un logement 5, de forme complémentaire, prévu en partie haute du boîtier 3, par exemple au-dessus de la partie où se trouve le milieu de l'écran 1.

Cet arrangement assure l'autocentrage de l'objectif 2, lorsque l'élément 4A est dans le logement 5, dit autocentreur.

Le boîtier 3 est ici supposé porté par un pied 6, éventuellement extensible et par exemple télescopique, qui est fixé sur un socle 7 prévu pour être placé sur une surface de support horizontale ou table, ici non représentée. Ce socle et ce pied sont destinés à faciliter l'orientation horizontale de l'objectif de la caméra vers l'objet des prises de vue et/ou de l'écran vers l'utilisateur, ainsi que le réglage en hauteur du boîtier portant cette caméra et cet écran.

Dans la réalisation envisagée le pied 6 est assujetti au socle 7 et au boîtier, par des articulations de réglage de positionnement 8 et 9, éventuellement d'un type connu, qui sont symbolisées sur la figure 2 et qui permettent chacune un débattement angulaire limité et freiné du pied par rapport à la verticale tant au niveau socle qu'à celui du boîtier. Ceci, conjugué aux possibilités éventuelles de réglage de la longueur du pied, permet notamment à l'utilisateur d'affiner le positionnement en distance, en hauteur et en inclinaison du boîtier selon ses besoins.

Il n'est généralement pas prévu d'orienter le boîtier d'un visiophone classique d'une manière telle que l'axe de visée V de l'objectif soit orienté verticalement vers le bas, par exemple pour prendre des vues d'un document placé sur le support où est posé le socle devant ce dernier et sous le boîtier, car l'écran est alors lui aussi orienté vers le bas dans une position où normalement il n'est plus visible par l'utilisateur et il n'est pas commode de vérifier que l'objet de la prise de vue est correctement photographié ou filmé.

Selon l'invention, l'agencement 4 est monté mobile par rapport au boîtier 3 de manière à permettre de modifier l'orientation de l'axe de visée V de l'objectif 2 dans un plan vertical par rapport au boîtier alors considéré fixe de manière que cet axe de visée puisse passer de l'horizontale à la verticale vers le bas par exemple pour des prises de vue de documents ou de petits objets placés sur la table servant de support au socle, sous l'objectif.

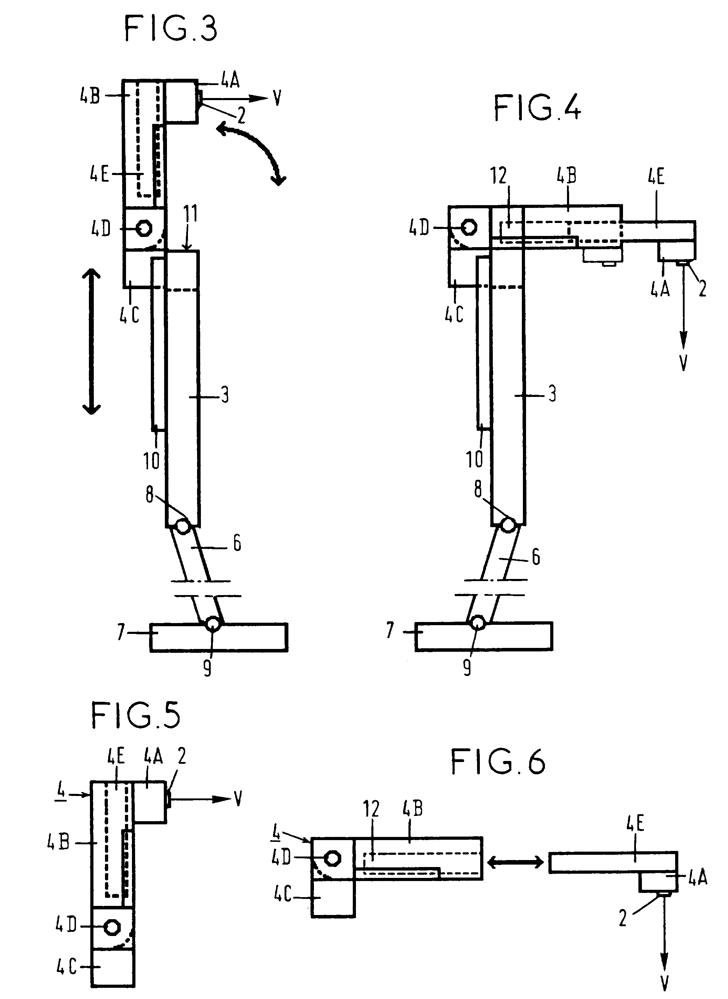

Dans la réalisation proposée, l'agencement 4 comporte un élément articulé composé de deux parties 4B, 4C formant coulisseau de manière à se déplacer verticalement par rapport au boîtier dans une glissière 10 de ce dernier, entre une première position pour laquelle l'élément de positionnement d'objectif 4A est descendu par gravité dans le logement 5 prévu pour lui du boîtier, comme on le voit sur la figure 2, et une seconde position d'extension extrême pour laquelle la partie 4B, qui est de forme allongée, est située hors de la glissière 10 et ici au-delà du niveau du bord supérieur 11 du boîtier 3, alors que la partie 4C reste maintenue par la glissière 10 où elle reste, comme montré figure 3. L'articulation 4D entre parties 4A et 4B de l'agencement 4 est réalisée d'une manière connue pour permettre à la partie 4B de tourner et de se rabattre vers le bas, depuis la position verticale montrée sur la figure 3, jusqu'à une position horizontale montrée sur la figure 4. Ce rabattement permet l'orientation de l'axe de visée de l'objectif 2 vers le bas et en conséquence la réalisation, comme envisagée ci-dessus, d'images de documents ou de petits objets placés sous cet objectif, classiquement sur la table de support où est posé le socle 7 de l'appareil. Dans la réalisation montrée ici, il est supposé que la partie 4B vient alors reposer sur le bord supérieur 11 du boîtier 3 au-dessus du logement 5, supposé plus étroit que cette partie dans la zone où celle-ci s'appuie.

Le relèvement de la partie 4B de la position où elle est horizontale et en appui sur le bord supérieur 11, jusqu'à une position verticale par rotation de cette partie autour de son articulation 4D permet de la réaligner avec la partie 4C et de la réintroduire dans la glissière 10 à la suite de cette dernière jusqu'à la position pour laquelle l'élément 4A est susceptible de venir reposer dans son logement 5. Un réglage fin de la verticalité de l'axe de visée V de l'objectif 2, est susceptible d'être réalisé en profitant des possibilités offertes par les articulations 8 et 9 qui permettent de jouer sur l'horizontalité de la partie 4B, lorsque cette dernière repose sur le bord supérieur 11 du boîtier 3. L'utilisateur voit alors directement sur l'écran 3 alors vertical ou quasi vertical, le document ou l'objet qu'il soumet à une prise de vue et ce dans la présentation qui en sera vu à distance dans le cas d'une communication visiophonique, ce qui permet donc de corriger aisément les éventuelles erreurs susceptibles d'affecter les prises de vue. Bien entendu la caméra peut également être utilisée à d'autres fins et en particulier à la conservation des images réalisées, en particulier si l'appareil équipé du mécanisme selon l'invention est de type terminal ou ordinateur.

Il est bien entendu aussi possible d'obtenir une certaine obliquité de l'axe de visée V, par un réglage en position à l'aide des articulations 8 et 9 si souhaité par l'utilisateur, par exemple pour photographier un petit objet de dessus et sous un certain angle, ces articulations permettent aussi bien entendu, en parallèle, un réglage de la verticalité de l'écran 1.

Dans la réalisation envisagée et ainsi que montré sur les figures 5 et 6, il est aussi prévu que l'élément de positionnement 4A où débouche l'objectif 2 soit porté par une rallonge 4E qui est montée coulissante dans un logement guide 12 ici ménagé à l'extrémité de la partie 4B qui est à l'opposé de celle où se trouve l'articulation 4D. La rallonge 4E est ici déplaçable en translation entre une position, pour laquelle elle est enfoncée dans le logement guide 12 et permet le logement de l'élément 4A au fond du logement auto-centreur 5, lorsque le coulisseau formé par les parties 4A-4B est en position verticale basse le long du boîtier 3, et une autre position pour laquelle l'élément 4A est largement écarté de la partie 4B et donc du reste de l'appareil par la saillie de la rallonge.

Cette possibilité de réglage de la longueur de saillie de la rallonge 4E permet à l'utilisateur de venir placer l'objectif 2 au-dessus des documents ou petits objets à photographier ou filmer, de manière à ne pas être gêné par la présence du socle 7 et du pied 6 dans le champ de prise de vue de l'objectif, lors des prises de vue pour lesquelles l'axe de visée est vertical ou quasi vertical. Les articulations 8 et 9 permettent aussi de compléter l'éloignement de l'axe de visée de l'objectif vis-à-vis du socle et du pied par un éventuel déplacement de l'appareil par rapport à son socle.

## Revendications

1. Appareil comportant un écran afficheur d'images, logé dans un boîtier (3), une caméra électronique assujettie au boîtier à proximité de l'écran pour permettre des prises de vue de type visiophonique, et un mécanisme permettant d'orienter au moins l'objectif (2) de la caméra, caractérisé en ce que ce mécanisme comporte un agencement (4), mobile par rapport au boîtier, incorporant un élément de positionnement d'objectif (4A) d'où débouche cet objectif, au-dessus de l'écran sur le boîtier, lors des prises de vue pour lesquelles l'axe de visée (V) de l'objectif est au moins approximativement horizontal dans une première position, ledit agencement comportant un élément articulé , composé d'une première et d'une seconde parties (4B, 4C) qui forment un coulisseau mobile en translation dans une glissière (10) du boîtier située en arrière de l'écran entre la première position de l'élément de positionnement et une seconde position pour laquelle la première partie est déplacée hors de la glissière où seule subsiste la seconde partie, de manière à dégager l'élément de positionnement, et une articulation (4D) unissant ces deux parties, hors de la glissière, cette articulation permettant un basculement de la première partie en une position pour laquelle l'axe de visée de l'objectif est dirigé vers le bas avec une orientation au moins approximativement verticale.

2. Appareil selon la revendication 1, caractérisé en ce que l'élément de positionnement d'objectif (4A) coopère avec un logement autocentreur (5) situé au-dessus de l'écran sur le boîtier et dans lequel cet élément de positionnement se positionne pour des prises de vue pour lesquelles l'axe de visée (V) de l'objectif est au moins approximativement horizontal et en ce que le coulisseau mobile d'élément articulé qui est composé de la première et de la seconde parties (4B, 4C) est mobile en translation dans une glissière (10) située en arrière de l'écran entre une première position pour laquelle l'élément de positionnement assujetti à la première partie est en place dans le logement autocentreur et une seconde partie pour laquelle la première partie est déplacée hors de la glissière où seule subsiste la seconde partie, de manière à dégager l'élément de positionnement hors du logement autocentreur.

3. Appareil, selon la revendication 2, caractérisé en ce que l'élément (4A) de positionnement d'objectif (2) est porté par une rallonge (4E) montée coulissante dans un logement guide (12) situé à une extrémité de ladite première partie (4B) qui est à l'opposé de l'articulation (4D), entre une position pour laquelle la rallonge est enfoncée dans le logement guide et permet le placement de l'élément de positionnement dans son logement autocentreur, lorsque le coulisseau est enfoncé dans la glissière, et une autre position pour laquelle l'objectif est éloigné du reste de l'appareil par la saillie de la rallonge qui éloigne l'élément de positionnement de la première partie.

4. Appareil selon au moins l'une des revendications 2 et 3, caractérisé en ce qu'il comporte un boîtier (3) monté sur un socle (7) par l'intermédiaire d'au moins un pied (6), éventuellement extensible, muni d'articulations de réglage de positionnement à chacune de ses deux extrémités qui permettent de déplacer l'appareil d'arrière en avant par rapport au socle de manière à notamment d'éloigner l'axe de visée de l'objectif loin du socle, en plus de la saillie de rallonge, lorsque cet axe est orienté verticalement par le positionnement de la première partie de coulisseau.

5. Appareil selon au moins l'une des revendications 2, 3 et 4, caractérisé en ce que le logement autocentreur est situé dans un bord supérieur du boîtier, au dessus du milieu de l'écran pour permettre une mise en place par gravité de l'élément de positionnement, lorsque le coulisseau s'enfonce dans la glissière.

6. Appareil selon au moins l'une des revendications 2 à 5, caractérisé en ce que la première partie du coulisseau vient reposer sur un bord supérieur (11) du boîtier dans la partie de ce boîtier où débouche le logement autocentreur, lorsque ladite première partie est basculée après avoir été sortie de la glissière.
